Europäisches Patentamt

European Patent Office

Office européen des brevets

(11) Publication number: **0 242 438**
**A1**

# EUROPEAN PATENT APPLICATION

(21) Application number: **86116340.0**

(22) Date of filing: **25.11.86**

(51) Int. Cl.⁴: **B25J 18/06**

(30) Priority: **17.04.86 US 853091**

(43) Date of publication of application:
**28.10.87 Bulletin 87/44**

(84) Designated Contracting States:
**AT BE CH DE ES FR GB GR IT LI LU NL SE**

(71) Applicant: **Cincinnati Milacron Inc.
(a Delaware Corporation), 4701 Marburg
Avenue
Cincinnati, Ohio 45209(US)**

(72) Inventor: **Rosheim, Mark Elling
1565 St. Paul Avenue
St. Paul, MN 55164(US)**

(74) Representative: **Lally, William et al
FORRESTER & BOEHMERT
Widenmayerstrasse 4/I
D-8000 München 22(DE)**

(54) Manipulator and robotic machine comprising a manipulator.

(57) A manipulator for a robotic machine comprises concentric input shafts (25, 26, 28) which drive manipulator elements comprising a base housing (17) rotatable around a first axis (20), a turret housing (21) rotatable on the base housing (17) about a second axis oblique to the first axis, and a universal joint coupling means (27, 38, 39, 40) connects a second (26) of said input shafts to the turret housing (21). The turret housing (21) supports an end effector mounting surface (23), and simultaneous rotation of the turret housing about the first and second axes (20, 22) of rotation is operable to move the end effector mounting surface in three directions.

FIG. 6

EP 0 242 438 A1

## "Manipulator and robotic machine comprising a manipulator"

The invention relates to mechanical manipulators as utilised in robotic machines, and the invention specifically relates to manipulators provided with a plurality of concentric input shafts which, typically, extend through the forearm of a robotic machine and which are powered by remote motors at a forearm end distal to the manipulator end.

Many manipulators have been developed for use in robotic machines for a variety of purposes, such as material handling, welding, paint spraying, and sealant applications to name but a few. Many of the prior art robotic wrists utilise gear trains, frequently employing bevel gear sets, and such devices are very expensive and in many cases difficult to assemble with the degree of precision necessary in gear trains.

Applicant has conceived of a novel robotic wrist which embodies at least one universal joint drive, thereby minimising the precision gear sets to be employed. Additionally, in a relatively small space, applicant has provided a mechanism which can rapidly position a turret housing which is rotatably mounted to a manipulator base housing, in a manner unlike those found in previous designs.

According to this invention there is provided a manipulator comprising a first input shaft, a base housing secured to the input shaft and which is rotatable therewith about a first axis, a second input shaft coaxial with the first input shaft, a turret housing mounted on the base housing for rotation relative thereto about a second axis which extends oblique to the first axis, wherein a universal joint coupling means connects said second input shaft to the turret housing.

In this manner a simplified drive for a robot manipulator is provided, and in particular one with rapid positioning capability for moving the turret on the manipulator base.

The universal joint coupling means may comprise a fork and clevis joint connected between the second input shaft and the turret housing, but other types of universal joint coupling means are contemplated.

The manipulator may comprise a third input shaft co-axial with the second input shaft, and an end effector rotatably mounted on the turret for rotation about a third axis which extends oblique to the second axis.

The third shaft may be connected to the end effector by a coupling means comprising a ring gear, or by the use of a universal joint coupling means.

Passages may be provided through which wires, hoses, fibre optic cables and the like may be fed through the concentric input shafts to the end effector mounting surface.

There will now be given a detailed description, to be read with reference to the accompanying drawings, of a manipulator which is a preferred embodiment of this invention, having been selected for the purposes of illustrating the invention by way of example, and three modified constructions thereof.

In the accompanying drawings:

FIGURE 1 of the drawings depicts a robotic machine and manipulator of the prior art;

FIGURE 2 illustrates the manipulator which is the preferred embodiment of this invention and which may be substituted for the prior art manipulator on the prior art robotic machine;

FIGURE 3 is a section through the main axis of the manipulator of Figure 2;

FIGURE 4 is a sectional view depicting the elements of Figure 3 rotated to an alternate position;

FIGURE 5 is a view taken along the line 4-4 of Figure 3;

FIGURE 6 illustrates an alternate embodiment of the manipulator of Figure 4;

FIGURE 7 illustrates another alternate embodiment of the manipulator of Figure 4;

FIGURE 8 is a sectional view taken along the line 8-8 of Figure 7; and

FIGURE 9 illustrates a further alternate embodiment of the manipulator of Figure 4.

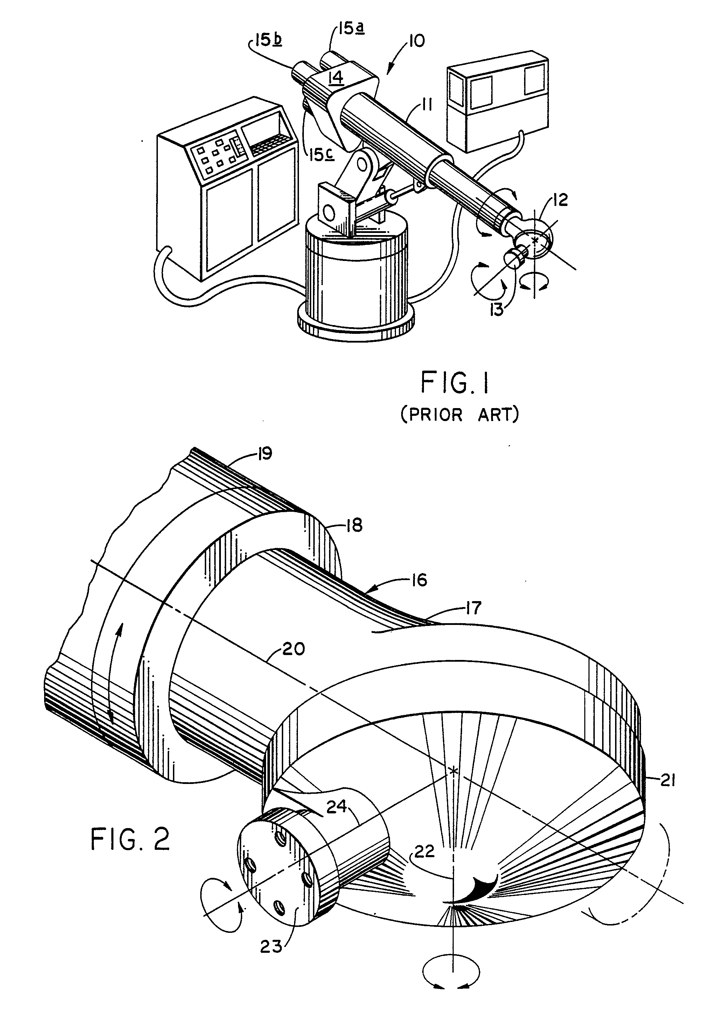

Figure 1 of the drawings depicts a robotic machine 10 of the prior art, manufactured by the present Applicant. In the robotic machine 10, a forearm assembly 11 is movable through a variety of spatial orientations, and the forearm assembly 11 carries, at the forward end, a mechanical manipulator 12 as that found in U.S. Patent 4,068,536, in which a plurality of concentric input shafts (not shown) are operable to drive an end effector mounting surface 13 through connection with a motor drive box 14 and a plurality of remotely located motors 15a, 15b, and 15c. Reference may be made to the patent for constructional details.

Figure 2 illustrates an improved manipulator 16 having a base housing 17 which is provided with a flange 18 for bolting to the rotational member 19 of the prior art device, in which a first axis 20 of rotation extends through the forwarm. A turret housing assembly 21 is rotatably carried on the base housing 17, and is rotatable about a second axis 22, oblique to the first axis 20 of rotation. In turn, an end effector mounting surface 23 is rotatable about a third axis 24 of rotation in the turret housing assembly 21, the third axis 24 being oblique to the second axis 22. Thus, the first, second, and third axes 20, 22, 24 of rotation correspond to first, second, and third concentric input shafts (not shown), the constructional details of which may be found in reference patent 4,068,536.

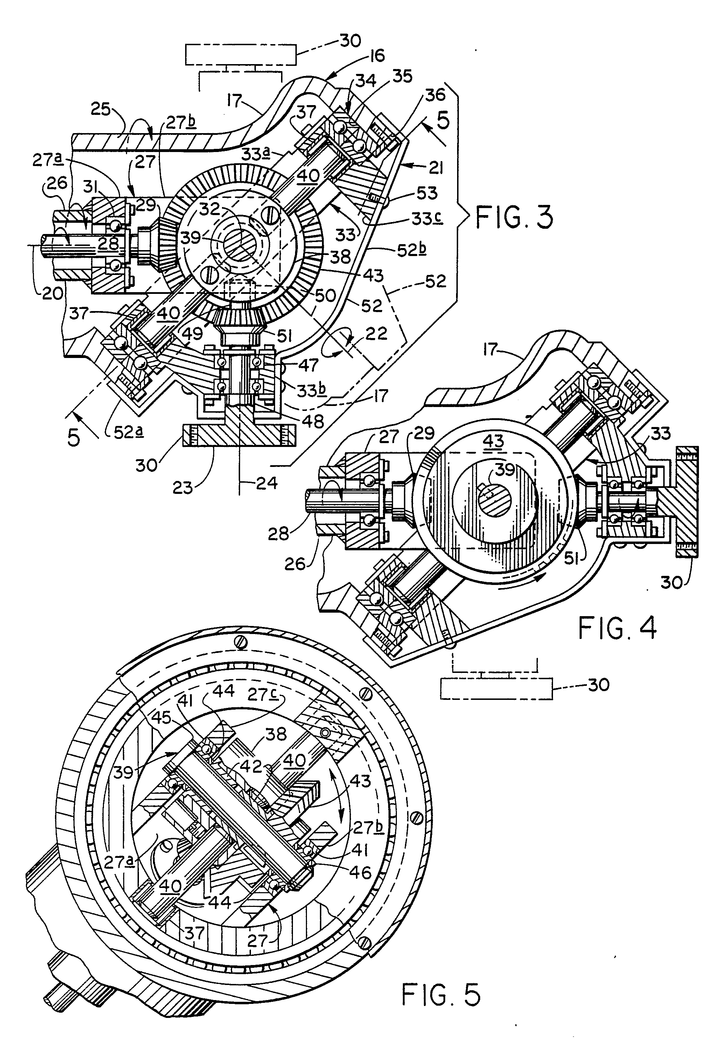

Referring now to the sectional view shown in Figure 3, the first concentric shaft 25 is represented as a cylindrical portion on the base housing 17 of the manipulator 16. The second input shaft 26 is shown as a tubular shaft having a bifurcated head 27 (see Figure 5) and the third input shaft 28 is shown as a solid shaft having an input pinion 29 which is drivingly connected to a tooling plate 30 which provides the end effector mounting surface 23. The third input shaft 28 is carried in a bearing 31 supported in the cross bar portion 27a of the bifurcated head 27.

The second shaft 26 is operative to rotate the turret housing assembly about the axis 22 by a universal joint coupling means. Specifically, one side 27b of the bifurcated head 27 is shown extending upwardly beyond an intersection point 32 of the first, second, and third axes 20, 22, 24 of Figure 2. The turret housing 33 is shown having a main ring portion 33a which is affixed in a bearing set 34 carried in a suitable bore 35 within the top surface 36 of the base housing 17. The bearing set 34 establishes the second axis 22 of rotation, i.e. the turret axis. The ring portion 33a has a pair of in-line needle bearings 37 whose axis crosses the intersection point 32 of the first, second, and third axes of rotation. A drive hub 38 is transversely journalled on a shaft 39 extending between the side walls 27, 27 c of the bifurcated head 27 (see Figure 5) and the hub 38 has a pair of in-line shafts 40 extending radially through the needle bearings 37 as drive spokes, so that a twisting motion of the hub 38 about the second axis 22 of rotation will drive the turret housing 33 in its bearing set 34.

Referring to Figure 5 it may be seen that the transverse shaft 39 is supported in bearings 41 in the side walls 27b,27 c of the bifurcated head 27, and the hub 38 is provided with a pair of bushings 42 so that the hub 38 may rotate relative to the shaft 39. A bevel gear 43 is keyed to the shaft 39 for positive rotation therewith, and a pair of spacers 44 are provided between the hub 38 and the bevel gear 43 to provide a shake-proof assembly restrained from axial movement. The shaft 39 has a head 45 at one end and a retaining ring 46 at the other to lock the assembly.

Referring to Figure 3 the turret housing 33 is provided with an angled portion 33b having a bearing set 47 carried therein. The tooling plate 30 has a shaft portion 48 extending through the bearing set 47 to provide rotation of the end effector mounting surface 23 about the third axis 24. The inner portion of the tooling plate shaft 48 comprises a pilot 49 carried in a bushing 50 in the hub 38 to provide stability for an integral pinion 51 which is engaged with the bevel gear 43.

Therefore, the third input shaft pinion 29 is drivingly connected to the tooling plate pinion 51 through the bevel gear 38. The turret housing 33 is provided with a sheet metal cover 52 having a cylindrical skirt portion 52 a extending around the base housing 17, and a gently sloped portion 52b is supported by the angled portion 33b of the turret housing 33 and a boss portion 33c on the opposite side of the turret hosuing 33. Sheet metal screws 53 are provided to hold the cover 52 in place.

The phantom lines in Figure 3 illustrate that the entire assembly 16 may be rotated about the first axis 20 by rotation of the base housing 17, and the housing rotation may be continuous.

The arrangement depicted in Figure 4 illustrates the relationship of the components after the tubular second input shaft 26 and integral bifurcated head 27 are rotated 180°. Thus, it can be seen that while the base housing 17 is held stationary in Figure 4 rotation of the transverse shaft 39 and bifurcated head 27 through 180° causes the turret housing 33 to also rotate 180°, thus, moving the tooling plate 30 from the phantom position to the solid position shown. Here is may be noted that the drive connection between the third input shaft 28, input pinion 29, bevel gear 43 and tooling place pinion 51 is held in constant mesh. It may be also noted that while some rotation of the tooling plate 30 may occur due to planetary motion with movement of the tooling plate shaft 48 about the drive gear 43, the motion may be subtracted by proper rotation of the input pinion 29 and, similarly, the rotation of the tooling plate 30 may be increased by proper rotation and direction of the input drive pinion 29.

In the exemplary preferred embodiment shown in Figure 3, the axes 20, 22, 24 are selected so that the angle between axis 20 and axis 22 is 45°, and the angle between axis 24 is 45°. Thus, the extent of the movement of the tooling plate between Figures 3 and 4 lies within 0 to 90°.

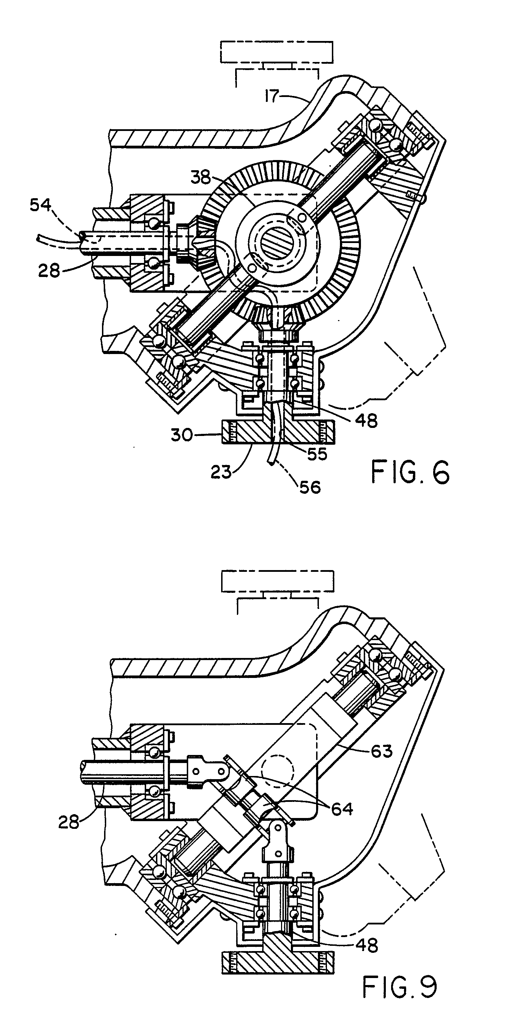

A first alternate embodiment is depicted in Figure 6, wherein the elements of Figure 3 are utilised, with the exception that the pilot 49 of the tooling plate shaft 48 has been omitted, and a central bores 54, 44 are now provided through the third input shaft 28 and the tooling plate shaft 48 (along the third axis of rotation), so that electrical wires, tubing, fiber optic cable, and the like 56, may be fed through the assembly along the first and third axes 20, 24 of rotation. A reduced-diameter drive hub 38 is depicted as well.

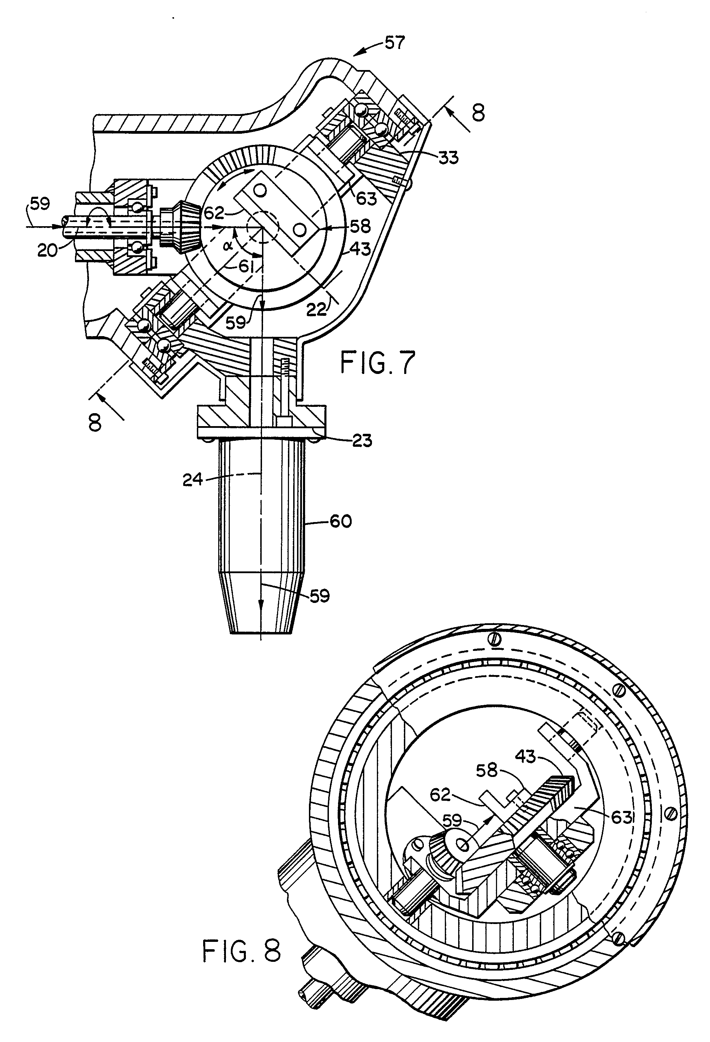

Another alternate embodiment is schematically depicted in Figures 7 and 8, wherein a hollow manipulator 57, or wrist is depicted, having two axes of rotation, i.e. the first and second axes 20, 22: a third axis 24 being a beam exit line, and a mirror assembly 58 is affixed to the gimbal-mounted bevel gear 43 so that a laser beam 59 may be conveyed along the first axis 20; reflected off the mirror: exited through the bore 23a extending through tooling plate surface 23. The tooling plate surface 23 carries a beam-focusing unit 60 well-known in the art and the beam 59 may be thereby applied to a target. The mirror must be rotatably driven so that a line 61 normal to the mirror surface 62 bisects the included angle between the first and third axis 20, 24, the hub 38 must be replaced with a yoke member 63, reaching around the mirror assembly 58. This assembly provides for beam manipulation through a limited range.

Figure 9 depicts still another alternate embodiment wherein a yoke member 63 is employed, and a double-universal joint 63 is used to establish a driving connection between the third input shaft 28 and the tooling plate shaft 48.

The feature disclosed in the foregoing description, or the following claims, or the accompanying drawings, expressed in their specific forms or in terms of a means for performing the disclosed function, or a method or process for attaining the disclosed result, or a class or group of substances or compositions, as appropriate, may, separately or in any combination of such features, be utilised for realising the invention in diverse forms thereof.

## Claims

1. A manipulator (16) comprising a first input shaft (25), a base housing (17) secured to the input shaft (25) and which is rotatable therewith about a first axis (20), a second input shaft (26) coaxial with the first input shaft (25), a turret housing (21) mounted on the base housing (17) for rotation relative thereto about a second axis (22) which extends oblique to said first axis (20), wherein a universal joint coupling means (27, 39, 38, 40) connects said second input shaft (26) to the turret housing (21).

2. A manipulator according to Claim 1 wherein the universal joint coupling means comprises a fork and clevis joint (27, 39( connected between the second input shaft (26) and the turret housing (21).

3. A manipulator according to one of Claims 1 and 2 comprising a third input shaft (28) coaxial with the second input shaft, and an end effector (23) rotatable mounted on the turret (21) for rotation about a third axis (24) which extends oblique to said second axis (22).

4. A manipulator according to Claim 3 wherein the third shaft (28) is connected to the end effector (24) by a coupling means comprising a ring gear (43).

5. A manipulator according to Claim 3 where in the third shaft (28) is connected to the end effector (48) by a universal joint coupling means (64).

6. A manipulator according to any one of the preceding claims wherein passages (54, 55) are provided which lie on the first and second axis of rotation.

7. A manipulator according to Claim 6 wherein the passages are suitable for use in the conduction of electricity, fluid under pressure, for fibre optics.

8. A manipulator means according to any one of Claims 1 to 5 comprising a mirror (58) mounted on the turret housing.

9. A robotic machine comprising a forearm assembly (11) movable through a variety of spatial orientations, a plurality of concentric input shafts (25, 26, 28) extending through the forearm assembly from drive means (14, 15a, 15b, 15c) at one end of the forearm to a manipulator (16) at the other end of the forearm assembly, wherein the manipulator is in accordance with any one of the preceding claims.

10. Manipulator having a plurality of input shafts (25, 26), concentric about a first axis (20), a first (25) of said input shafts being directly connected to a manipulator base housing (17), a turret housing (21), rotatably mounted to said base housing (17) about a second axis (22) oblique to said first axis (20); a universal joint coupling means (27, 38, 39, 40) connecting a second (26) of said input shafts to said turret housing (21); and an end effector mounting surface (23) on said turret housing (17); whereby simultaneous rotation of said turret housing (17) about said first and second axes (20, 22) is operable to effectuate movement of said end effector mounting surface (23) in three mutually-perpendicular directions.

0 242 438

FIG. I
(PRIOR ART)

FIG. 2

FIG. 3

FIG. 4

FIG. 5

FIG. 6

FIG. 9

FIG. 7

FIG. 8

| | **DOCUMENTS CONSIDERED TO BE RELEVANT** | | EP 86116340.0 |
|---|---|---|---|
| Category | Citation of document with indication. where appropriate, of relevant passages | Relevant to claim | CLASSIFICATION OF THE APPLICATION (Int. Cl.4) |
| | EP - A2 - 0 200 202 (HITACHI) 05-11-86)    (05-11-86) | | B 25 J 18/06 |
| P,X | * Fig. 1-3,11; abstract * | 1-3,5, 9,10 | |
| | -- | | |
| | EP - A2 - 0 130 539 (TOYODA KOKI KABUSHIKI) | | |
| X | * Fig. 1-3,6,9; claims * | 1,2,9, 10 | |
| A | * Fig. 1-3,6,9; claims; page 14 * | 3-6 | |
| | -- | | |
| | GB - A - 2 147 877 (ASEA) | | |
| A | * Fig. 1-3; abstract * | 1,3,4, 6,7,9, 10 | |
| | -- | | |
| | GB - A - 2 164 017 (FAIREY) | | TECHNICAL FIELDS SEARCHED (Int. Cl.4) |
| A | * Fig. 2-4; abstract * | 1,6-9 | |
| | -- | | |
| | FR - A - 1 496 094 (SOCIETE NANTAISE) | | B 25 J 17/00 B 25 J 18/00 |
| A | * Fig. 1,2 * | 1,6,7, 9,10 | |
| | ---- | | |

The present search report has been drawn up for all claims

| Place of search | Date of completion of the search | Examiner |
|---|---|---|
| VIENNA | 30-01-1987 | KRAL |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82